# EUROPEAN PATENT APPLICATION

(11) **EP 3 687 037 A1**
(43) Date of publication of application: **29.07.2020**
(21) Application number: 20153342.9
(22) Date of filing: 23.01.2020
(51) Int. Cl.: H02K 1/32, H02K 5/173, H02K 7/04, H02K 9/19, H02K 21/14

(54) **ELECTRIC MOTOR**

(30) Priority: 25.01.2019 KR 20190009883
(71) Applicant: LG Electronics Inc., SEOUL, 07336 (KR)
(72) Inventor: KANG, Joon, 08592 Seoul (KR)
(74) Representative: Vossius & Partner Patentanwälte Rechtsanwälte mbB

(57) **Abstract**

The present disclosure relates to an electric motor that may include: a housing; a stator having a stator core and provided in the housing; a rotor having a rotor core, and mounted inside the stator with an air gap therebetween to be rotatable with respect to a rotating shaft; and a plurality of cooling fluid grooves provided on a circumferential surface of the rotor core, so as to make a cooling fluid flow to the air gap, allowing cooling performance on a surface of the rotor core to be enhanced.

## Description

### BACKGROUND

### 1. Technical Field

The present disclosure relates to an electric motor capable of directly cooling a surface of a rotor core.

### 2. Description of the Related Art

An electric vehicle is an eco-friendly vehicle that uses only electricity as its source of energy and is driven by supplying an electrical energy to an electric motor from a high-voltage battery.

In general, an electric motor includes a rotor and a stator. The rotor may be provided inside the stator in a rotatable manner.

Technologies have been developed to cool down heat generated in the electric motor. Heat is generated in a stator coil, wound around a stator core, of the stator when an electric current flows in the stator coil to rotate the rotor.

As for the electric motor used in the electric vehicle, cooling of heat generated in the electric motor plays an important role in achieving a high powered, smaller, and more efficient electric motor.

In conventional motor cooling methods, an indirect cooling method in which cooling water is circulated inside the housing to indirectly cool down a motor, and a direct cooling method in which oil is directly sprayed onto a stator or rotor to cool down the motor.

The direct cooling method has higher cooling efficiency and cooling performance compared to the indirect cooling method. Thus, research and development on the direct cooling method have been actively carried out recently.

In European Patent Laid-Open Publication No. EP 2 667 486 B2, which is hereby incorporated by reference, a method for cooling down a rotor of an electric device is disclosed.

The related art Patent Document discloses a structure for cooling down a motor by forming a flow path so that a cooling fluid flows in a shaft of the rotor and a rotor core, respectively.

However, the related art Patent Document has the following problems.

First, a surface temperature of a rotor core rises when a motor is driven at a high speed.

Second, when the motor is driven at an ultra-high speed (e.g., 23000 rpm), an outer circumferential surface of the rotor core becomes mechanically uneven due to the centrifugal force, causing friction and vibration. As a result, noise is increased and lifespan of the motor is reduced.

Third, as a rotor is rotated at a high speed, rigidity of a flow path inside the rotor is reduced, thereby causing problems such as deformation.

Fourth, as a cooling fluid supply portion that supplies a cooling fluid into a shaft of the rotor is stationary and the shaft of the rotor is rotatable, it is difficult to connect the cooling fluid supply portion and the flow path inside the shaft. For example, problems, such as sealing and friction of a connected portion between the cooling fluid supply portion and the flow path inside the shaft, occur.

### SUMMARY

Embodiments disclosed herein solve problems of the related art. Embodiments disclosed herein provide an electric motor that can improve cooling performance on a surface of a rotor core by forming a flow of cooling fluid on the surface of the rotor core.

Embodiments disclosed herein provide an electric motor that can automatically align a rotor by forming pressure on an outer circumferential surface of a rotor core as the rotor rotates.

Embodiments disclosed herein provide an electric motor that can reduce noise and extend lifespan of a motor by reducing friction and vibration caused by unevenness of a rotor core generated when the motor is rotated at a high speed.

Embodiments disclosed herein provide an electric motor that can improve rigidity of a flow path inside a rotor even when the rotor rotates at a high speed.

Embodiments disclosed herein provide an electric motor that can solve problems such as sealing and friction between a cooling fluid supply portion and a cooling fluid supply pipe accommodated in a rotating shaft when connected to each other by fixing the cooling fluid supply pipe used to supply a cooling fluid into the rotating shaft.

Embodiments disclosed herein provide an electric motor that may include a housing, a stator having a stator core and provided in the housing, a rotor having a rotor core and mounted inside the stator with an air gap therebetween to be rotatable with respect to a rotating shaft, and a plurality of cooling fluid grooves provided on a circumferential surface of the rotor core, so as to make a cooling fluid flow to the air gap.

The cooling fluid may be a non-conductive fluid.

The cooling fluid may be oil or air.

Each of the plurality of cooling fluid grooves may include an inclined groove portion inclined at a predetermined angle with respect to a lengthwise direction of the rotor core.

Each of the plurality of cooling fluid grooves may have a narrow width and extend in the lengthwise direction of the rotor core to be longer than the width.

Each of the plurality of cooling fluid grooves may have a cross section formed in any one of a semi-circular, square, or triangular shape.

The rotor core may have a cylindrical shape. And the plurality of cooling fluid grooves may be spaced apart from each other in a circumferential direction of the rotor cor.

Each of the plurality of cooling fluid grooves may include a first cooling fluid groove portion formed at one side of the rotor core in a lengthwise direction and extending in the lengthwise direction, a second cooling fluid groove portion formed at another side of the rotor core in the lengthwise direction and extending in parallel with the first cooling fluid groove portion, and an intermediate inclined groove portion extending between the first cooling fluid groove portion and the second cooling fluid groove portion in an inclined manner, so as to provide communication between the first cooling fluid groove portion and the second cooling fluid groove portion.

Each of the plurality of cooling fluid grooves may be inclined toward a central portion from opposite ends of the rotor core along a lengthwise direction and be provided with a first cooling fluid inclined groove portion and a second cooling fluid inclined groove portion connected to each other at the central portion in a communicating manner.

The first cooling fluid inclined groove portion and the second cooling fluid inclined groove portion may be inclined upward toward the opposite ends of the rotor core from the central portion, respectively.

The first cooling fluid inclined groove portion and the second cooling fluid inclined groove portion may be inclined downward toward the opposite ends of the rotor core from the central portion, respectively.

Each of the plurality of cooling fluid grooves may be inclined from one end toward another end of the rotor core.

The rotating shaft may include a hollow portion formed therein, a plurality of rotating shaft injection holes communicating with the hollow portion and formed through the rotating shaft in a thickness direction so that the cooling fluid is sprayed into the rotor core, and a cooling fluid supply pipe installed to be accommodated in the hollow portion so as to supply the cooling fluid into the hollow portion.

The cooling fluid supply pipe may axially extend from one end to another end of the rotating shaft. And one end of the cooling fluid supply pipe may be fixed to the housing.

The rotating shaft may be provided with a return passage formed between an outer circumferential surface of the cooling fluid supply pipe and an inner circumferential surface of the rotating shaft, and designed to return the cooling fluid flowing from one inner end to another inner end of the cooling fluid supply pipe to the plurality of rotating shaft injection holes along the outer circumferential surface of the cooling fluid supply pipe.

The cooling fluid supply pipe may be provided with a guide portion radially protruding from the outer circumferential surface thereof toward the plurality of rotating shaft injection holes, so as to guide the cooling fluid returned along the return passage to the plurality of rotating shaft injection holes.

In addition, an oil flow path having an oil inlet port formed at one side thereof and provided inside of an upper portion of the housing, a plurality of radial oil injection holes communicating with the oil flow path and formed through the upper portion of the housing in a thickness direction so that oil is sprayed into an inner space of the housing, and an oil outlet port provided at a lower portion of the housing may be further provided.

The stator may further include a coil wound around the stator core, an oil flow groove communicating with the oil flow path and formed on a circumferential surface of the stator core along a circumferential direction, and a plurality of axial injection holes communicating with the oil flow groove and formed in the stator core along a lengthwise direction, so that oil is sprayed from opposite ends of the stator core to the coil.

Also, a housing cover coupled to both ends of the housing, respectively, a cover oil flow path having one end thereof communicating with the oil flow path and provided in the housing cover, and a bearing cooling passage provided at another end of the cover oil flow path to cool down the bearing may be further provided.

In addition, a rotor oil flow path having one end thereof communicating with the plurality of rotating shaft injection holes and configured such that oil flows into the rotor core, and a rotor oil injection hole formed at another end of the rotor oil flow path so that the oil is sprayed into an inner space of the housing may be further provided.

Effects of an electric motor according to the embodiments of the present disclosure are as follows.

First, a cooling fluid groove may be provided on a surface of a rotor core, so as to form a flow of cooling fluid on the surface of the rotor core that causes high heat generation as a rotor rotates, thereby directly cooling down the rotor through heat exchange between a cooling fluid and the rotor core.

This allows cooling efficiency to be maximized. Accordingly, driving stability and reliability of the electric motor may be increased when operated with high output power, which is a required feature for a drive motor used in vehicles, and driving efficiency of the electric motor itself may also be enhanced.

Second, as the cooling fluid groove is located as close as possible to a cause of heat generation (rotor core and permanent magnet, etc.), thermal resistance between the cause of heat generation and a cooling fluid may be minimized. In addition, a cooling speed of the rotor may be increased quickly.

Third, as a cooling fluid flows along the cooling fluid groove, the cooling fluid filled in an air gap may cool the rotor core itself, thereby cooling down the entire rotor.

Fourth, as the cooling fluid groove forms a flow of cooling fluid on a circumferential surface of the rotor core and at the same time induces a high pressure on the surface, automatic rotation balancing and rotational alignment of the rotor may be enabled by a fluid pressure when the motor is rotated at a high speed, thereby reducing or minimizing vibration and noise.

Fifth, as a bearing cooling passage is provided at a bearing accommodation portion that surrounds a bearing to cool down the bearing, lifespan of the bearing may be extended, thereby increasing lifespan of the electric motor is in overall.

Sixth, as a high surface pressure is formed on an outer circumferential surface of the rotor core, a rotor oil flow path provided in the rotor core may not be deformed even when the rotor is rotated at a high speed. Also, a fluid pressure may allow rigidity of a flow path to be enhanced.

Seventh, as a cooling fluid supply pipe that supplies a cooling fluid is accommodated in a rotating shaft when the rotating shaft rotates, and one end of the cooling fluid supply pipe is fixed to a housing, problems such as friction and sealing between the cooling fluid supply pipe and a cooling fluid supply portion may be obviated.

That is, since the cooling fluid supply pipe is stationary, it makes easier to connect and seal between the cooling fluid supply pipe and the cooling fluid supply portion, thereby causing no friction between therebetween.

Eighth, as a return passage is provided between the rotating shaft and the cooling fluid supply pipe, and a guide portion is provided at the cooling fluid supply pipe in a protruding manner, it makes easier to guide oil returned along the return passage to a rotating shaft injection hole.

Ninth, as the rotor oil flow path is provided inside the rotor core, a cooling fluid flowing along the rotor oil flow path may directly come in contact with the rotor core to directly cool down the rotor core, thereby improving cooling performance and cooling efficiency.

Tenth, as a partition wall is provided at a central portion of the rotor core, and the rotor oil flow path is provided at the front and rear of the rotor core, respectively, based on the partition wall, a cooling fluid may flow from the central portion to opposite ends of the rotor core, thereby evenly cooling down the rotor, from the central portion to the opposite ends thereof by maintaining a heat balance.

### BRIEF DESCRIPTION OF THE DRAWINGS

FIG. 1 is a conceptual view illustrating an outer appearance of an electric motor according to an embodiment of the present disclosure.
FIG. 2 is a cross-sectional view taken along line "II-II" of FIG. 1.
FIG. 3 is a conceptual view illustrating an oil flow path and a plurality of radial oil injection holes in a housing of FIG. 1.
FIG. 4 is a conceptual view illustrating how oil flows along an axial injection hole in a stator core of FIG. 3.
FIG. 5 is a cross-sectional view taken along line "V-V" in FIG. 2.
FIG. 6 is a conceptual view illustrating an enlarged portion of "VI" in FIG. 5.
FIG. 7 is a perspective view of a rotor assembly in FIG. 2.
FIG. 8 is a cross-sectional view taken along line "VIII-VIII" in FIG. 7.
FIG. 9 is a perspective view of a rotating shaft in FIG. 8.
FIG. 10 is a conceptual view of a cooling fluid supply pipe in FIG. 8.
FIG. 11 is a conceptual view illustrating a plurality of cooling fluid grooves on an outer circumferential surface of a rotor core in accordance with a first embodiment of the present disclosure.
FIG. 12 is a lateral view of the rotor core of FIG. 11, viewed radially from one side surface.
FIG. 13 is a conceptual view illustrating a state in which the rotor core of FIG. 11 is rotated in an opposite direction.
FIG. 14 is a lateral view of the rotor core of FIG. 13, viewed radially from one side surface.
FIG. 15 is a conceptual view illustrating a plurality of cooling fluid grooves on an outer circumferential surface of a rotor core in accordance with a second embodiment of the present disclosure.
FIG. 16 is a lateral view of the rotor core of FIG. 15, viewed radially from one side surface.
FIG. 17 is a conceptual view illustrating a plurality of cooling fluid grooves on an outer circumferential surface of a rotor core in accordance with a third embodiment of the present disclosure.
FIG. 18 is a lateral view of the rotor core of FIG. 17, viewed radially from one side surface.
FIG. 19 is a conceptual view illustrating a plurality of cooling fluid grooves on an outer circumferential surface of a rotor core in accordance with a fourth embodiment of the present disclosure.
FIG. 20 is a lateral view of the rotor core of FIG. 19, viewed radially from one side surface.

### DETAILED DESCRIPTION OF THE EMBODIMENTS

Hereinafter, embodiments will be described with reference to the accompanying drawings. In the drawings, the same or similar elements are designated with the same or similar reference numeral, and redundant description has been omitted. Suffixes, such as "module" and "unit", may be used to refer to elements or components. Use of such a suffix herein is merely intended to facilitate description of the specification, and the suffix itself is not intended to give any special meaning or function. In describing embodiments, if a detailed explanation for a related known technology or construction is considered to unnecessarily divert the gist, such explanation has been omitted but would be understood by those skilled in the art. Also, it should be understood that the accompanying drawings are merely illustrated to easily explain the concept, and therefore, they should not be construed to limit the technological concept disclosed herein by the accompanying drawings, and the concept should be construed as being extended to all modifications, equivalents, and substitutes included in the concept and technological scope.

Terms including ordinal numbers such as first and second, for example, may be used herein to describe various elements, but the elements should not be limited by those terms. The terms are used merely for the purpose to distinguish an element from another element.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation may include a plural representation as far as it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

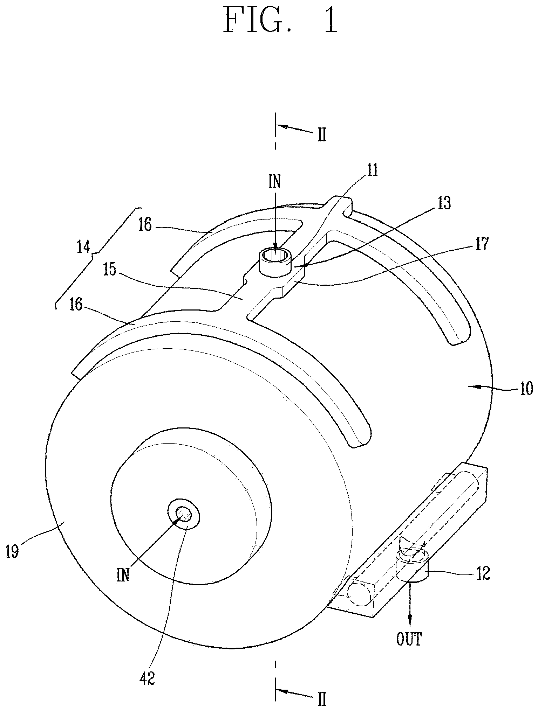

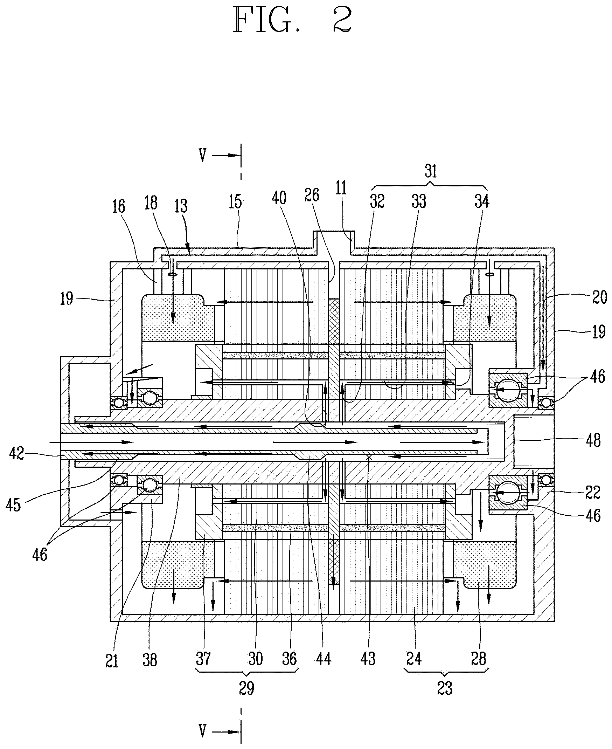

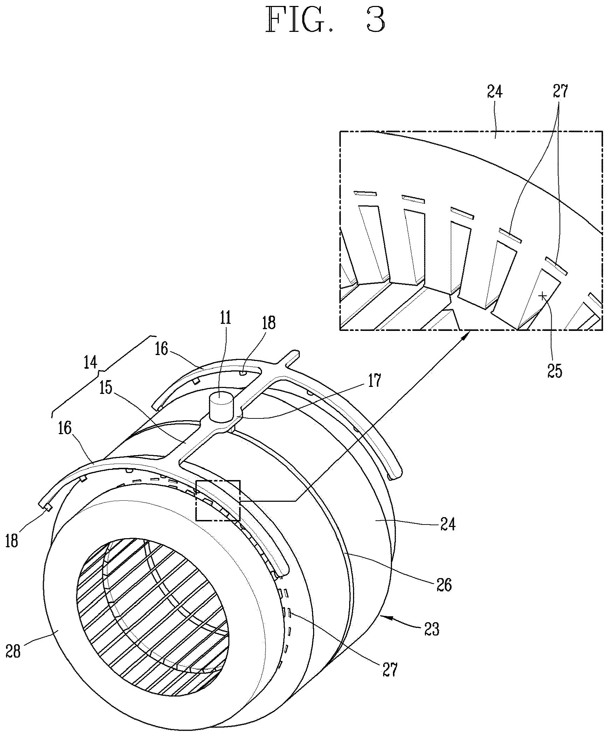

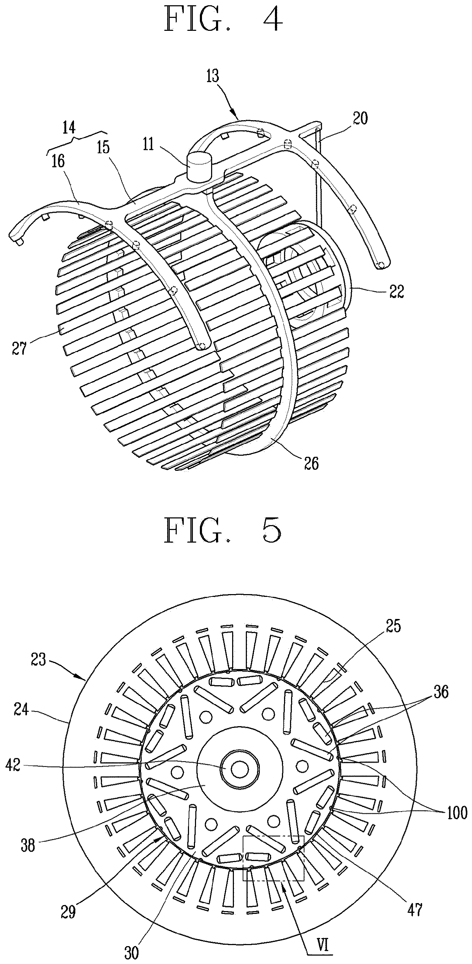

FIG. 1 is a conceptual view illustrating an outer appearance of an electric motor according to an embodiment of the present disclosure, FIG. 2 is a cross-sectional view taken along line "II-II" of FIG. 1, FIG. 3 is a conceptual view illustrating an oil flow path (13) and a plurality of radial oil injection holes in a housing (10) of FIG. 1, and FIG. 4 is a conceptual view illustrating how oil flows along an axial injection hole (27) in a stator core in FIG. 3.

An electric motor according to an embodiment of the present disclosure may include a housing 10, a stator 23, and a rotor 29.

The housing 10 may define an outer appearance of the electric motor. The housing 10 may have a cylindrical shape. The housing 10 may be provided therein with an accommodating space. Both ends of the housing 10 may be opened, respectively. The housing 10 may be provided with a housing cover 19.

The housing cover 19 may be coupled to the both ends of the housing 10, respectively, so as to cover the both ends of the housing 10.

The stator 23 may be accommodated in the accommodating space of the housing 10. The stator 23 may include a stator core 24 and a coil 28.

The stator core 24 may be made up of a plurality of laminated electrical steel sheets and have a cylindrical shape. An outer circumferential surface of the stator core 24 may be press-fitted to an inner circumferential surface of the housing 10.

A rotor accommodating hole may be formed in a center of the stator core 24. The rotor 29 may be accommodated in the rotor accommodating hole of the stator core 24. With an air gap 47 between an inner circumferential surface of the stator core 24 and the rotor 29, the rotor 29 may be mounted to the stator core 24 in a rotatable manner with respect to a rotating shaft 38.

A plurality of slots 25 may be provided inside the stator core 24. The coil 28 may be wound around the stator core 24 through the plurality of slots 25. The coil 28 may be configured as a hairpin type. A portion of the coil 28 protruding out of opposite ends of the stator core 24 may be referred to as an end coil 28.

A cooling fluid may be introduced into the housing 10 so as to cool the electric motor.

In the present disclosure, a cooling fluid may include a non-conductive fluid, such as oil, air, or the like. In this embodiment, oil is used as an example of the cooling fluid.

For example, an oil flow path 13 may be disposed at an upper portion of the housing 10. The oil flow path 13 may be formed in the housing 10.

An oil inlet port 11 may be provided at one side of the oil flow path 13, so that oil is introduced into the housing 10 through the oil inlet port 11.

An oil outlet port 12 may be provided at a lower portion of the housing 10, so that oil is discharged to an outside from an inside of the housing 10 through the oil outlet port 12.

The oil discharged through the oil outlet port 12 may flow to the oil inlet port 11 by an oil pump (not shown).

The oil discharged through the oil outlet port 12 may be cooled by an oil cooler (not shown) to be circulated through the oil inlet port 11.

The oil flow path 13 may protrude from an upper outer circumferential surface of the housing 10. Alternatively, the oil flow path 13 may be provided at the cylindrical-shaped housing 10 in a recessed manner. In this embodiment, the oil flow path 13 is provided in the housing 10 and protrudes from the upper outer circumferential surface of the housing 10.

The oil flow path 13 may include an oil distributor 14, a stator core connecting portion 17, and the like.

The oil distributor 14 may include an axial oil distribution portion 15 extending in a lengthwise direction of the housing 10, and a circumferential oil distribution portion 16 extending in a circumferential direction of the housing 10.

The stator core connecting portion 17 may be provided at a central portion of the axial oil distribution portion 15. The stator core connecting portion 17 may protrude widely to both left and right (or lateral) sides from the central portion of the axial oil distribution portion 15.

An upper side of the stator core connecting portion 17 may communicate with the oil inlet port 11, so that part (or some) of oil flows in the lengthwise direction of the housing 10 along the axial oil distribution portion 15.

A lower side of the stator core connecting portion 17 may communicate with an oil flow (or movement) groove 26 of the stator core 24, which will be described hereinafter, so that another part (or some other) of the oil flows from the stator core connecting portion 17 to the oil flow groove 26 of the stator core 24 along a circumferential direction.

The circumferential oil distribution portion 16 may be provided at front and rear end potions of the axial oil distribution portion 15 in an arc shape, respectively. A central portion of the circumferential oil distribution portion 16 may communicate with the axial oil distribution portion 15, so that oil transferred from the axial oil distribution portion 15 moves in the circumferential direction along the circumferential oil distribution portion 16.

A plurality of radial oil injection (or spray) holes 18 at a lower side of the circumferential oil distribution portion 16 may be formed through the housing 10 in a thickness direction. Each of the plurality of radial oil injection holes 18 may be spaced apart from one another in the circumferential direction of the housing 10.

With this configuration, oil, allocated by the circumferential oil distribution portion 16, may be injected or sprayed though each of the plurality of radial oil injection holes 18 into the accommodating space of the housing 10.

Oil may be sprayed through each of the plurality of radial oil injection holes 18 directly onto the end coil 28, so as to directly cool down the end coil 28.

The oil flow groove 26 may be formed at a central portion in a lengthwise direction of the stator core 24 along the circumferential direction.

The oil flow groove 26 may be opened radially outward and concave radially inward. The outermost end (opened side) of the oil flow groove 26 may be covered by the inner circumferential surface of the housing 10.

An upper central portion of the oil flow groove 26 may communicate with the oil inlet port 11 through the stator core connecting portion 17, so that oil flows radially inward of the stator core 24 along the oil flow groove 26.

The stator core 24 may be provided with a plurality of axial injection holes 27. The plurality of axial injection holes 27 may be located radially outward than the plurality of slots 25. The plurality of axial injection holes 27 may be spaced apart from one another in a circumferential direction of the stator core 24.

Each of the plurality of axial injection holes 27 may be axially formed through the stator core 24 along the lengthwise direction. One end of the plurality of axial injection holes 27 may communicate with the oil flow groove 26, respectively, and another end thereof may communicate with the accommodating space of the housing 10 in a direction of any one of the opposite ends of the stator core 24.

With this configuration, oil may flow from the oil flow groove 26 along the plurality of axial injection holes 27 so as to be injected toward the end coil 28.

The housing cover 19 may be provided therein with a cover oil flow path 20 extending in a radial direction. An outer end of the cover oil flow path 20 may communicate with one end of the oil distributor 14, and an inner end of the cover oil flow path 20 may communicate with a bearing accommodation portion 21.

The bearing accommodation portion 21 may axially protrude from an inner surface of the housing cover 19. The bearing accommodation portion 21 may be formed in the circumferential direction to cover a bearing 46.

The bearing 46 may be accommodated in the bearing accommodation portion 21. A bearing cooling passage 22 may be disposed between the bearing accommodation portion 21 and the bearing 46.

With this configuration, oil may flow from the oil distributor 14 to the cover oil flow path 20 and the bearing cooling passage 22. As the oil exchanges heat with the bearing 46 while flowing along the bearing cooling passage 22, the bearing 46 may be cooled down.

As oil is sprayed through the plurality of axial oil injection holes 27 directly onto the coil 28, heat generated in the coil 28 may be directly cooled down, thereby improving cooling efficiency and cooling performance of the electric motor.

The plurality of axial injection holes 27 may be located adjacent to the plurality of slots 25 in the radial direction, thereby minimizing thermal resistance between the coil 28, which is a heating element (or high heating source), and oil, which is a cooling medium. Accordingly, heat produced in the coil 28 may be conducted evenly or uniformly from a central portion of the stator core 24 in the lengthwise direction. As a result, a cooling speed of the stator 23 may be quickly increased.

In addition, the oil flow groove 26 may allow oil to flow radially inward from an outer edge of the central portion of the stator core 24, so as to release heat generated in the central portion of the stator core 24 to the oil. Accordingly, the stator 23 may be efficiently cooled down.

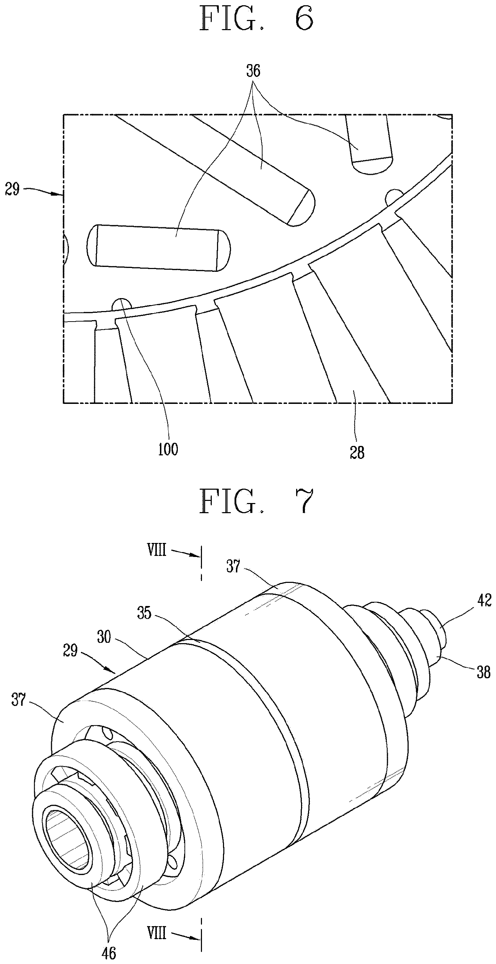

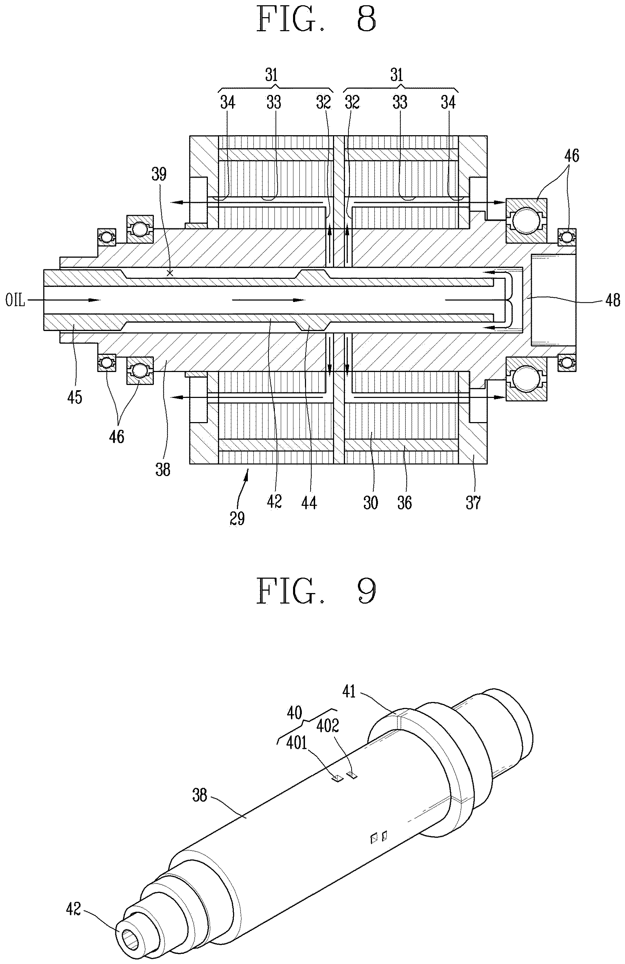

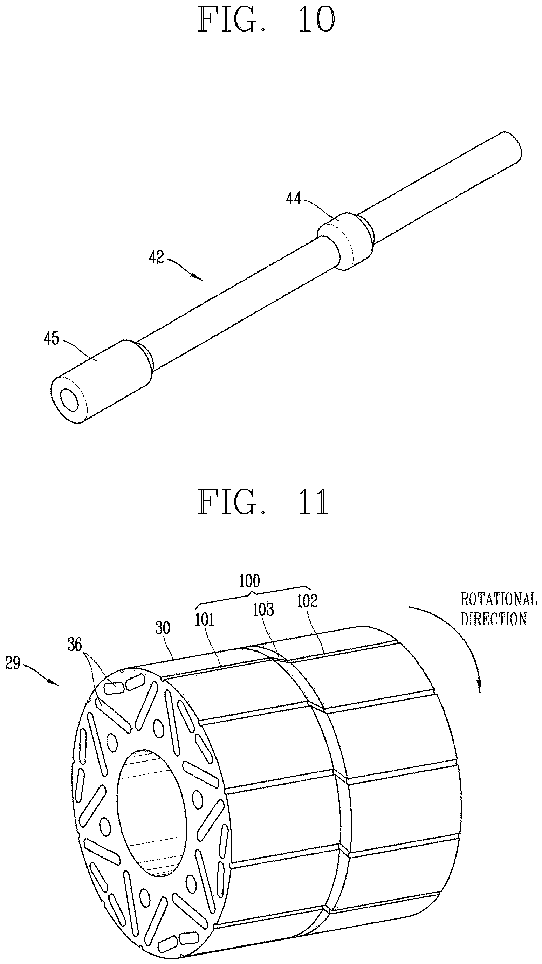

FIG. 5 is a cross-sectional view taken along line "V-V" in FIG. 2, FIG. 6 is a conceptual view illustrating an enlarged portion of "VI" in FIG. 5, FIG. 7 is a perspective view of a rotor assembly in FIG. 2, FIG. 8 is a cross-sectional view taken along line "VIII-VIII" in FIG. 7, FIG. 9 is a perspective view of a rotating shaft (38) in FIG. 8, and FIG. 10 is a conceptual view of a cooling fluid supply pipe (42) in FIG. 8.

The rotor 29 may include a rotor core 30, a permanent magnet 36, and an end plate 37.

The rotor 29 may be disposed inside the stator core 24 with the air gap 47 therebetween.

The rotor core 30 may be formed by laminating a plurality of electrical steel sheets. The rotor core 30 may have a cylindrical shape.

A plurality of magnet accommodating holes may be axially formed through the rotor core 30, so that a plurality of permanent magnets 36 is accommodated in the plurality of magnet accommodating holes.

A rotating shaft accommodating hole may be axially formed through a central portion of the rotor core 30, so that the rotating shaft 38 may be accommodated in the rotating shaft accommodating hole. The rotating shaft 38 may have a cylindrical shape.

A plurality of rotor oil flow paths 31 may be provided inside the rotor core 30. Each of the plurality of rotor oil flow paths 31 may be located between the magnet accommodating hole and the rotating shaft accommodating hole to be spaced apart from each other in the circumferential direction.

The plurality of rotor oil flow paths 31 may penetrate through the electrical steel sheets of the rotor core 30 in a thickness direction.

Each of the plurality of rotor oil flow paths 31 may be configured as a plurality of first rotor oil flow paths 32 and a plurality of second rotor oil flow paths 33, respectively.

Each of the plurality of first rotor oil flow paths 32 may extend in a radial direction of the rotor core 30.

Each of the plurality of second rotor oil flow paths 33 may extend in an axial direction of the rotor core 30.

A radial outer end of each of the plurality of first rotor oil flow paths 32 and an axial inner end of each of the plurality of second rotor oil flow paths 33 may be connected to each other in a communicating manner.

A partition wall 35 may be provided at the central portion of the rotor core 20 in a lengthwise direction. The partition wall 35 may extend in the radial direction of the rotor core 30, and have a disc shape. The rotating shaft accommodating hole may be formed through a central portion in a radial direction of the partition wall 25 in a thickness direction, so that the rotating shaft 35 penetrates therethrough.

The plurality of rotor oil flow paths 31 may be provided at the front and rear of the rotor core 30, respectively, with the partition wall 35 interposed therebetween.

The plurality of first rotor oil flow paths 32 located at the front and rear of the rotor core 30, respectively, may be disposed adjacent to the partition wall 35 with the partition wall 35 interposed therebetween.

One end of the plurality of second rotor oil flow paths 33 located at the front and rear of the rotor core 30, respectively, may communicate with an outer end of the plurality of first rotor oil flow paths 32, respectively. Another end of the plurality of second rotor oil flow paths 33 may extend in a direction away from the partition wall 35, respectively.

A plurality of rotor oil injection holes 34 may be provided at the another end of the second rotor oil flow path 33. Each of the rotor oil injection holes 34 may be formed through the end plate 37 in a thickness direction. The plurality of oil injection holes 34 may be spaced apart from each other in the circumferential direction.

An axial movement prevention protrusion 41 may radially protrude from one end of the rotating shaft 38.

A plurality of bearings 46 may be coupled to both ends of the rotating shaft 38, respectively, so that the both ends of the rotating shaft 38 may be rotatably supported by the plurality of bearings 46.

The end plate 37 may be coupled to both ends of the rotor core 30, respectively, so as to prevent the plurality of permanent magnets 36 embedded in the rotor core 30 from being separated from the magnet accommodating hole, and being positioned at an outer side in an axial direction.

The rotating shaft 38 may be provided therein with a hollow portion 39. A cooling fluid supply pipe 42 may be accommodated in the hollow portion 39.

The cooling fluid supply pipe 42 may have a cylindrical shape. A cooling passage portion may be formed in the cooling fluid supply pipe 42 in a lengthwise direction, so that oil flows along the cooling passage portion. Both ends of the cooling fluid supply pipe 42 may be opened.

One end of the cooling fluid supply pipe 42 may be fixed to the housing cover 19. The one end of the cooling fluid supply pipe 42 may be connected to a cooling fluid supply portion (not shown), so that a cooling fluid is introduced into the cooling fluid supply pipe 42.

The cooling fluid supply portion (not shown) may be configured to supply a cooling fluid, for example, oil.

One end of the rotating shaft 38 may be opened, so that the cooling fluid supply pipe 42 is inserted into the rotating shaft 38. A blocking wall 48 may be provided at another end of the rotating shaft 38, so that the another end thereof is blocked by the blocking wall 48.

A plurality of rotating shaft injection holes 40 may be formed through one side of the rotating shaft 38 in a thickness direction. The plurality of rotating shaft injection holes 40 may be spaced apart from one another in a circumferential direction of the rotating shaft 38.

Each of the plurality of rotating shaft injection holes 40 may communicate with an inner end of the plurality of first rotor oil flow paths 32, respectively, so that oil is introduced into the first rotor oil flow path 32 from the rotating shaft 38.

The plurality of rotating shaft injection holes 40 may be spaced apart from each other in a lengthwise direction of the rotating shaft 38. The plurality of rotating shaft injection holes 40 may include a plurality of first rotating shaft injection holes 401 located at the front in the lengthwise direction of the rotating shaft 38, and a plurality of second rotating shaft injection holes 402 located at the rear in the lengthwise direction of the rotating shaft 38.

The plurality of first rotating shaft injection holes 401 and the plurality of second rotating shaft injection holes 402 may be spaced apart from each other by a thickness of the partition wall 35.

Another end of the cooling fluid supply pipe 42 may be spaced apart from the blocking wall 48 by a predetermined interval, so that oil introduced from the one end of the cooling fluid supply pipe 42 flows to the another end of the cooling fluid supply pipe 42. Then, the oil may be discharged to an outside from an inside of the cooling fluid supply pipe 42 through a gap between the another end of the cooling fluid supply pipe 42 and the blocking wall 48.

An outer diameter of the cooling fluid supply pipe 42 may be smaller than an inner diameter of the rotating shaft 38, so that a return passage (or flow path) 43 may be provided between the inner circumferential surface of the rotating shaft 38 and the outer circumferential surface of the cooling fluid supply pipe 42.

A guide portion 44 may radially protrude from the outer circumferential surface of the cooling fluid supply pipe 42. The guide portion 44 may be inclined with respect to the outer circumferential surface of the cooling fluid supply pipe 42 in a protruding manner.

The guide portion 44 may act as a resistor with respect to a flow direction of oil flowing along the return passage 43.

The guide portion 44 may be located at a downstream of the rotating shaft injection hole 40 based on a flow direction of oil flowing along the return passage 43, so as to guide oil returned along the return passage 43 to the plurality of rotating shaft injection holes 40.

When taking a look at a movement path of oil, oil may be introduced into the rotating shaft 38 from the cooling fluid supply portion (not shown) along the cooling fluid supply pipe 42. An oil flow direction may be changed 180 degrees, to a direction opposite to an oil inflow direction, at the gap between the another end of the cooling fluid supply pipe 42 and the blocking wall 48 of the rotating shaft 38.

Then, the oil discharged from the another end of the cooling fluid supply pipe 42 may be returned along the return passage 43 provided between the rotating shaft 38 and the cooling fluid supply pipe 42. The oil returned via the guide portion 44 may be guided to the plurality of rotating shaft injection holes 40.

Subsequently, the oil may be radially sprayed through the plurality of rotating shaft injection holes 40 into the first rotor oil flow path 32 in the rotor core 30.

Then, the oil may move to the second rotor oil flow path 33, which is bent 90 degrees from the first rotor oil flow path 32, and then flow to opposite ends of the rotor core 30, respectively.

Subsequently, the oil may be sprayed through the plurality of rotor oil injection holes 34 of the end plate 37 toward the bearing accommodation portion 21 of the housing cover 19.

A gap may be formed between the guide portion 44 and the rotating shaft 38, so that oil penetrates through the gap therebetween.

A protruding portion 45 may radially protrude from one end of the cooling fluid supply pipe 42.

A gap may be formed between the protruding portion 45 and the rotating shaft 38, so that oil is discharged from the rotating shaft 38 through the gap therebetween.

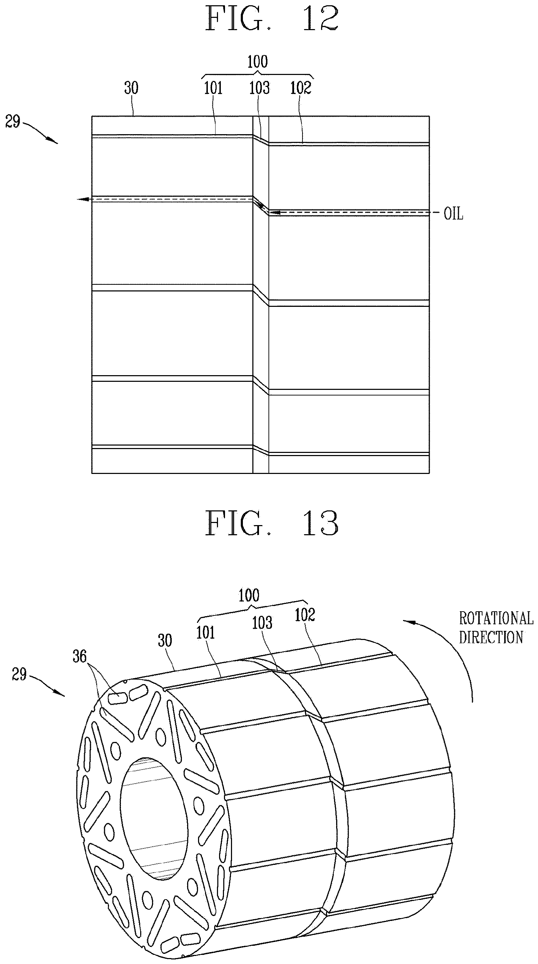

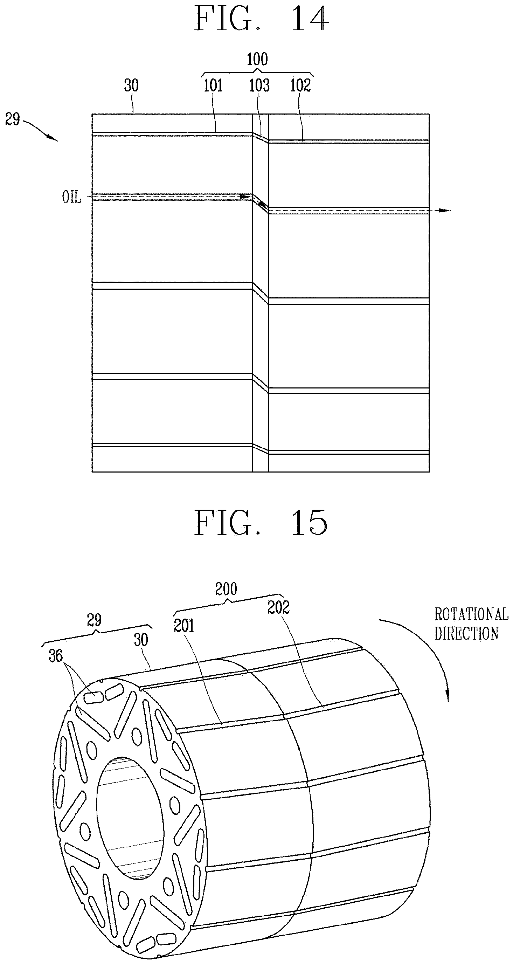

FIG. 11 is a conceptual view illustrating a plurality of cooling fluid grooves (100) on an outer circumferential surface of a rotor core (30) in accordance with a first embodiment of the present disclosure, FIG. 12 is a lateral view of the rotor core(30) of FIG. 11, viewed radially from one side surface, FIG. 13 is a conceptual view illustrating a state in which the rotor core (30) of FIG. 11 is rotated in an opposite direction, and FIG. 14 is a lateral view of the rotor core (30) of FIG. 13, viewed radially from one side surface.

A plurality of cooling fluid grooves 100 may be provided on a circumferential surface of the rotor core 30. The cooling fluid groove 100 may have a narrow width and a long length. The width of the cooling fluid groove 100 may be 0.5mm to 5mm.

The cooling fluid groove 100 may be configured to guide a cooling fluid to the air gap 47 between the outer circumferential surface of the rotor core 30 and the inner circumferential surface of the housing 10.

The cooling fluid groove 100 may include an inclined groove portion to provide a force to make a cooling fluid flow to the air gap 47.

The inclined groove portion may be inclined at a predetermined angle with respect to a lengthwise direction of the rotor core 30. The angle of the inclined groove portion may be 2° to 45°.

A shape of cross section of the cooling fluid groove 100 may vary depending on a flow of fluid intended. For example, the shape may be a semicircle, square, triangle, and the like.

Each of the plurality of cooling fluid grooves 100 may include a first cooling fluid groove portion 101, a second cooling fluid groove portion 102, and an intermediate inclined groove portion 103.

Each of the first cooling fluid groove portion 101 and the second cooling fluid groove portion 102 may extend along the lengthwise direction of the rotor core 30 in an elongated manner.

The first cooling fluid groove portion 101 may be located at one side of the rotor core 30, and the second cooling fluid groove portion 102 may be located at another side of the rotor core 30. The first cooling fluid groove portion 101 and the second cooling groove portion 102 may be located parallel to each other.

The intermediate inclined groove portion 103 may be disposed between the first cooling fluid groove portion 101 and the second cooling fluid groove portion 102, so as to provide communication between the first cooling fluid groove portion 101 and the second cooling fluid groove portion 102. The intermediate inclined groove portion 103 may be inclined with respect to the lengthwise direction of the rotor core 30.

The first cooling fluid groove portion 101, the intermediate inclined groove portion 103, and the second cooling fluid groove portion 102 may be formed on a circumferential surface with a same diameter to have a same width and cross-sectional shape. However, the first cooling fluid groove portion 101, the intermediate inclined groove portion 103, and the second cooling fluid groove portion 102 may have a different length from one another.

Dimensions (or size) of the cooling fluid groove 100 and an inclination angle of the inclined groove portion may differ according to a rotational speed of the electric motor and a magnitude of a flow of cooling fluid intended.

A flow direction, type of flow, and surface pressure of cooling fluid may differ according to a shape and disposition structure of the cooling fluid groove 100 formed on the outer circumferential surface of the rotor core 30.

For example, referring to FIGS. 11 and 12, as the rotor core 30 rotates clockwise, oil may flow from a right end to a left end of the rotor core 30 along the second cooling fluid groove portion 102, the inclined groove portion 103, and the first cooling fluid groove portion 101.

Referring to FIGS. 13 and 14, as the rotor core 30 rotates counterclockwise, oil may flow from the left end to the right end of the rotor core 30 along the first cooling fluid groove portion 101, the intermediate inclined groove portion 103, and the second cooling fluid groove portion 102.

As a cooling fluid, such as oil, flows along the cooling fluid groove 100, a high pressure may be generated in the air gap 47.

With this configuration, as the rotor 29 rotates, the cooling fluid groove 100 may form a flow of cooling fluid on a surface of the rotor core 30 that causes high heat generation, thereby directly cooling down the rotor 29 through heat exchange between the cooling fluid and the rotor core 30. As a result, cooling efficiency may be maximized. Thus, driving stability and reliability of the electric motor may not only be increased when operated with high output power, which is a required feature for a drive motor used in vehicles, but also driving efficiency of the electric motor itself may be enhanced.

Also, the cooling fluid groove 100 may be located as close as possible to a cause of heat generation (rotor core 30 and permanent magnet 36, etc.), thereby minimizing thermal resistance between the cause of heat generation and a cooling fluid, and increasing a cooling speed of the rotor 29.

In addition, as a cooling fluid flows along the cooling fluid groove 100, the cooling fluid filled in the air gap 47 may cool the rotor core 30 itself, thereby cooling down the entire rotor 29.

Further, as the cooling fluid groove 100 forms a flow of cooling fluid on the circumferential surface of the rotor core 30 and at the same time induces a high pressure on the surface, automatic rotation balancing and rotational alignment of the rotor 29 may be enabled by a fluid pressure when the rotor 29 is rotated at a high speed. As a result, vibration and noise of the electric motor may be minimized.

Furthermore, the bearing cooling passage 22 may be provided at the bearing accommodation portion 21 that surrounds the bearing 46, so as to cool down the bearing 46. Accordingly, lifespan of the bearing 46 may be extended, thereby increasing lifespan of the electric motor in overall.

Hereinafter, various forms and disposition structures of the cooling fluid groove 100 will be described.

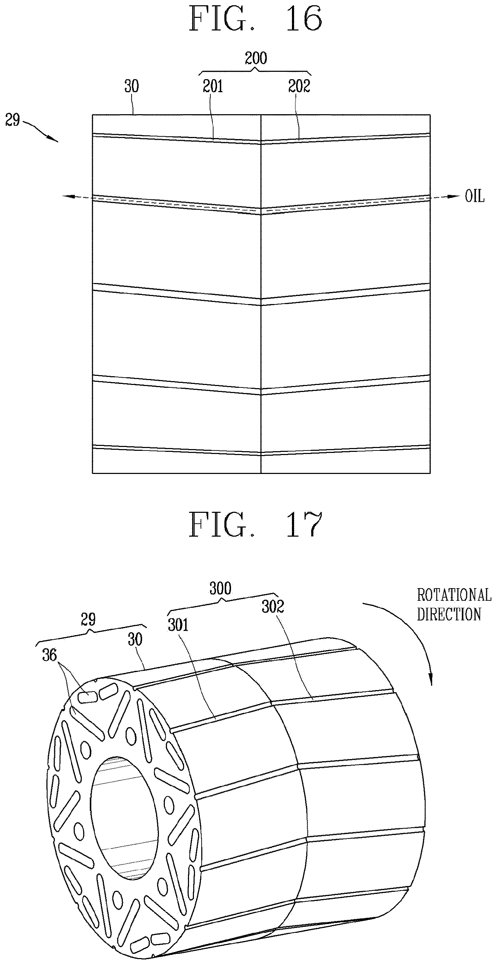

FIG. 15 is a conceptual view illustrating a plurality of cooling fluid grooves (200) on an outer circumferential surface of a rotor core (30) in accordance with a second embodiment of the present disclosure, and FIG. 16 is a lateral view of the rotor core (30) of FIG. 15, viewed radially from one side surface.

A cooling fluid grove 200 may include a first accommodating groove portion 201 and a second accommodating groove portion 202.

Each of the first cooling fluid groove portion 201 and the second cooling fluid groove portion 202 may extend in an elongated manner and be inclined at a predetermined angle with respect to a lengthwise direction of the rotor core 30.

The first cooling fluid groove potion 201 may be disposed at one side of an outer circumferential surface of the rotor core 30, and the second cooling fluid groove portion 202 may be disposed at another side of the outer circumferential surface of the rotor core 30.

The first cooling fluid groove portion 201 and the second cooling fluid groove portion 202 may meet at a central portion of the rotor core 30 in a communicating manner, and be inclined upward toward opposite ends from a central portion of the outer circumferential surface of the rotor core 30.

With this configuration, as the rotor 29 rotates, a cooling fluid may flow from an inner end to an outer end of an outer circumferential surface of the first cooling fluid groove portion 201 and the second cooling fluid groove portion 202, respectively, namely, from the central portion of the outer circumferential surface of the rotor core 30 to the opposite ends thereof. This may allow the cooling fluid to be discharged to the accommodating space of the housing 10.

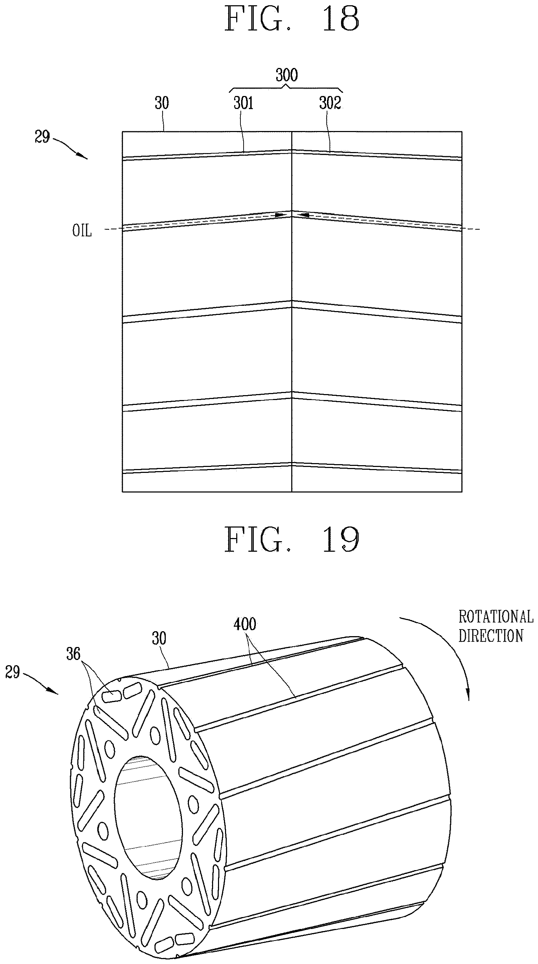

FIG. 17 is a conceptual view illustrating a plurality of cooling fluid grooves (300) on an outer circumferential surface of a rotor core (30) in accordance with a third embodiment of the present disclosure, and FIG. 18 is a lateral view of the rotor core (30) of FIG. 17, viewed radially from one side surface.

In this embodiment, a first cooling fluid groove portion 301 and a second cooling fluid groove portion 302 may meet at a central portion of the rotor core 30 in a communicating manner, and be inclined downward toward opposite ends from a central portion of the rotor core 30.

With this configuration, as the rotor 29 rotates, a cooling fluid may flow from an outer end to an inner end of an outer circumferential surface of the first cooling fluid groove 301 and the second cooling fluid groove 302, respectively. That is, the cooling fluid may be introduced into a central portion of an outer circumferential surface of the rotor core 30 from the opposite ends thereof through the air gap 47, thereby generating a high pressure on a surface of the rotor core 30.

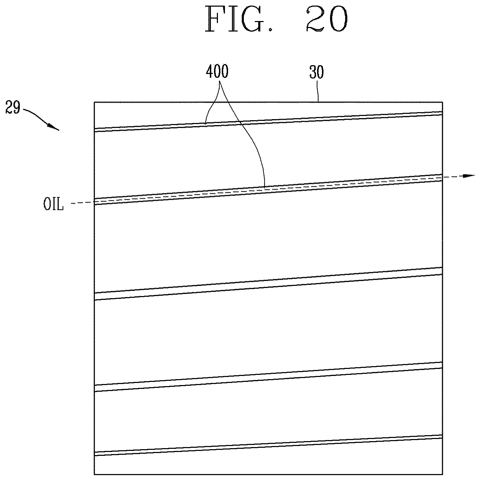

FIG. 19 is a conceptual view illustrating a plurality of cooling fluid grooves (400) on an outer circumferential surface of a rotor core (30) in accordance with a fourth embodiment of the present disclosure, and FIG. 20 is a lateral view of the rotor core (30) of FIG. 19, viewed radially from one side surface.

In this embodiment, each of a plurality of cooling fluid grooves 400 may be inclined at a predetermined angle with respect to a lengthwise direction of the rotor core 30. Each of the plurality of cooling fluid grooves 400 may be inclined from one end to another end of an outer circumferential surface of the rotor core 30 in the form of a straight line.

The first to fourth embodiments illustrated in FIGS. 11 to 20 may be mutually combined in any possible combination, and the first to fourth embodiments may be applicable to the embodiments illustrated in FIGS. 1 to 10.

## Claims

1. An electric motor, comprising:
a housing;
a stator having a stator core and provided in the housing;
a rotor having a rotor core and mounted inside the stator with an air gap therebetween to be rotatable with respect to a rotating shaft; and
a plurality of cooling fluid grooves provided on a circumferential surface of the rotor core, so as to make a cooling fluid flow to the air gap,
wherein each of the plurality of cooling fluid grooves includes an inclined groove portion inclined at a predetermined angle with respect to a lengthwise direction of the rotor core.

2. The electric motor of claim 1, wherein the rotor core has a cylindrical shape, and
wherein the plurality of cooling fluid grooves is spaced apart from each other in a circumferential direction of the rotor core,
wherein each of the plurality of cooling fluid grooves has a narrow width and extends in a lengthwise direction of the rotor core to be longer than the width.

3. The electric motor of claim 1 or 2, wherein the cooling fluid is oil or air.

4. The electric motor of any one of claims 1 to 3, wherein each of the plurality of cooling fluid grooves has a cross section formed in any one of a semi-circular, square, or triangular shape.

5. The electric motor of any one of claims 1 to 4, wherein each of the plurality of cooling fluid grooves comprises:
a first cooling fluid groove portion formed at one side of the rotor core in a lengthwise direction and extending in the lengthwise direction;
a second cooling fluid groove portion formed at another side of the rotor core in the lengthwise direction and extending in parallel with the first cooling fluid groove portion; and
an intermediate inclined groove portion extending between the first cooling fluid groove portion and the second cooling fluid groove portion in an inclined manner, so as to provide communication between the first cooling fluid groove portion and the second cooling fluid groove portion.

6. The electric motor of any one of claims 1 to 5, wherein each of the plurality of cooling fluid grooves is inclined toward a central portion from opposite ends of the rotor core along a lengthwise direction, and is provided with a first cooling fluid inclined groove portion and a second cooling fluid inclined groove portion connected to each other at the central portion in a communicating manner,
wherein the first cooling fluid inclined groove portion and the second cooling fluid inclined groove portion are inclined upward toward the opposite ends of the rotor core from the central portion, respectively.

7. The electric motor of any of claims 1 to 5, wherein each of the plurality of cooling fluid grooves is inclined toward a central portion from opposite ends of the rotor core along a lengthwise direction, and is provided with a first cooling fluid inclined groove portion and a second cooling fluid inclined groove portion connected to each other at the central portion in a communicating manner,
wherein the first cooling fluid inclined groove portion and the second cooling fluid inclined groove portion are inclined downward toward the opposite ends of the rotor core from the central portion, respectively.

8. The electric motor of any one of claims 1 to 5, wherein each of the plurality of cooling fluid grooves is inclined from one end toward another end of the rotor core.

9. The electric motor of any of claims 1 to 8, wherein the rotating shaft comprises:
a hollow portion formed therein;
a plurality of rotating shaft injection holes communicating with the hollow portion and formed through the rotating shaft in a thickness direction, so that the cooling fluid is sprayed into the rotor core; and
a cooling fluid supply pipe installed to be accommodated in the hollow portion, so as to supply the cooling fluid into the hollow portion,
wherein the cooling fluid supply pipe axially extends from one end to another end of the rotating shaft, and
wherein one end of the cooling fluid supply pipe is fixed to the housing.

10. The electric motor of claim 9, wherein the rotating shaft is provided with a return passage formed between an outer circumferential surface of the cooling fluid supply pipe and an inner circumferential surface of the rotating shaft, and designed to return the cooling fluid flowing from one inner end to another inner end of the cooling fluid supply pipe to the plurality of rotating shaft injection holes along the outer circumferential surface of the cooling fluid supply pipe.

11. The electric motor of claim 10, wherein the cooling fluid supply pipe is provided with a guide portion radially protruding from the outer circumferential surface thereof toward the plurality of rotating shaft injection holes, so as to guide the cooling fluid returned along the return passage to the plurality of rotating shaft injection holes.

12. The electric motor of any of claims 1 to 11, further comprising:
an oil flow path having an oil inlet port formed at one side thereof and provided inside of an upper portion of the housing;
a plurality of radial oil injection holes communicating with the oil flow path and formed through the upper portion of the housing in a thickness direction, so that oil is sprayed into an inner space of the housing; and
an oil outlet port provided at a lower portion of the housing.

13. The electric motor of claim 12, wherein the stator further comprises:
a coil wound around the stator core;
an oil flow groove communicating with the oil flow path and formed on a circumferential surface of the stator core along a circumferential direction; and
a plurality of axial injection holes communicating with the oil flow groove and formed in the stator core along a lengthwise direction, so that oil is sprayed from opposite ends of the stator core to the coil.

14. The electric motor of claim 12 or 13, further comprising:
a housing cover coupled to both ends of the housing, respectively;
a cover oil flow path having one end thereof communicating with the oil flow path and provided in the housing cover; and
a bearing cooling passage provided at another end of the cover oil flow path to cool down the bearing.

15. The electric motor of any one of claims 9 to 14, further comprising:
a rotor oil flow path having one end thereof communicating with the plurality of rotating shaft injection holes and configured such that oil flows into the rotor core; and
a rotor oil injection hole formed at another end of the rotor oil flow path, so that the oil is sprayed into an inner space of the housing.
